# FASCICULE DE BREVET EUROPEEN

(11) **EP 3 084 856 B1**
(45) Date de publication et mention de la délivrance du brevet: **22.08.2018**
(21) Numéro de dépôt: 14812533.9
(22) Date de dépôt: 16.12.2014
(51) Int. Cl.: H01M 2/02, H01M 2/34

(54) **PILE A SURFACE STRUCTUREE NON CONDUCTRICE**
BATTERIE MIT STRUKTURIERTER, NICHT LEITENDER OBERFLÄCHE
CELL WITH NON-CONDUCTING STRUCTURED SURFACE

(30) Priorité: 19.12.2013 EP 13198585
(43) Date de publication de la demande: 26.10.2016
(73) Titulaire: The Swatch Group Research and Development Ltd, 2074 Marin (CH)
(72) Inventeur: BURRI, Yves, CH-1066 Epalinges (CH); STALDER, Michael, 2564 Bellmund (CH); MARTIN, Jean-Claude, CH-2037 Montmollin (CH)
(74) Mandataire: Goulette, Ludivine
(86) Numéro de dépôt international: PCT/EP2014/077989
(87) Numéro de publication internationale: WO 2015/091503

(56) Documents cités:
- JP-A- H04 269 446
- JP-A- 2003 217 533
- JP-A- 2008 021 566
- JP-A- 2013 033 937
- US-A- 5 202 199
- US-A1- 2011 091 753

## Description

La présente invention concerne une pile ou un accumulateur comprenant un boîtier d'anode, une anode située à l'intérieur du boîtier d'anode, un boîtier de cathode assujetti au boîtier d'anode, un joint de scellement scellant le boîtier de cathode au boîtier d'anode, une cathode située à l'intérieur du boîtier de cathode entre l'anode et le boîtier de cathode, et une membrane entre l'anode et la cathode.

### ART ANTERIEUR

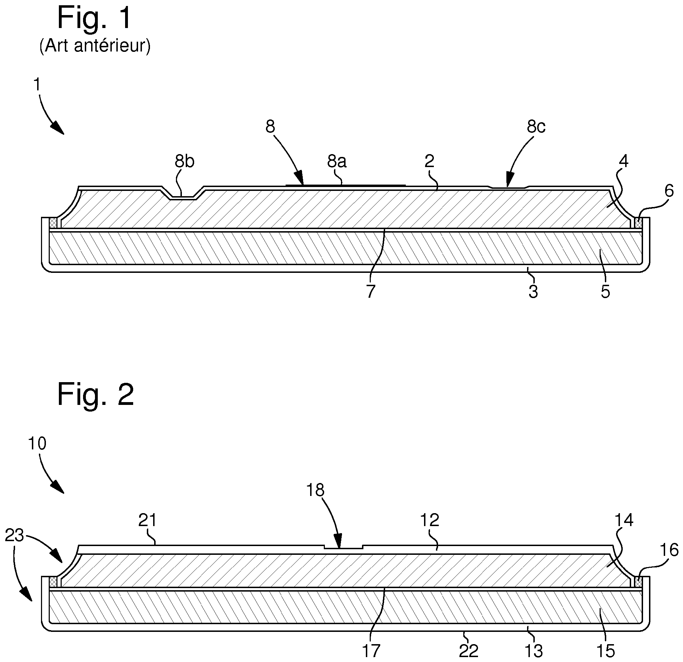

Il est connu un accumulateur d'énergie électrique comme des piles dites boutons pour alimenter des appareils électriques comme des montres ou des calculatrices visibles à la figure 1. Ces piles 1 comprennent un boîtier d'anode 2, une anode 4 située à l'intérieur du boîtier d'anode, un boîtier de cathode 3 assujetti au boîtier d'anode 2, un joint de scellement 6 scellant le boîtier de cathode au boîtier d'anode, une cathode 5 située à l'intérieur du boîtier de cathode entre l'anode et le boîtier de cathode, et une membrane 7 entre l'anode et la cathode.

Pour distinguer les différents types de piles boutons, il est prévu que des marquages 8 soient réalisés sur l'une des surfaces extérieures de la pile c'est-à-dire sur la surface du boîtier de cathode ou sur celle du boîtier d'anode.

Ces marquages peuvent être réalisés de plusieurs façons différentes. Une première façon consiste à utiliser une encre ou une peinture que l'on vient déposer sur l'une des surface de la pile. Cette méthode à l'avantage d'être simple et d'être facilement adaptable. En effet, il est facile de passer d'un marquage pour un premier type de pile à un marquage pour un second type de pile.

Toutefois, un premier inconvénient de cette solution est d'assurer une bonne adhésion de la couche sur le boîtier de la pile. Un autre inconvénient est que la peinture ou encre sur la pile est facilement effaçable ou rayable. En effet, ces piles sont manipulées sans ménagement, peuvent tomber ou subir une usure mécanique entraînant l'apparition d'éraflures ou de déformations qui détériorent l'encre ou la peinture. En cas de détérioration de la couche déposée, il est possible que des résidus d'encre ou de peinture se détachent de la surface de la pile et viennent polluer le contact électrique ou perturber le fonctionnement normal de l'appareil.

Une autre solution consiste à réaliser un marquage 8b, 8c par étampage. Ce procédé consiste à déformer plastiquement à l'aide d'une presse équipée d'un poinçon, le boîtier d'anode ou plus traditionnellement le boîtier de cathode. L'étampage peut entraîner un marquage 8b qui sera visible de l'autre côté du boîtier ou simplement un marquage 8c par écrasement de la matière. Toutefois, cette méthode présente l'inconvénient d'entraîner une gestion plus complexe. En effet, pour chaque marquage, il est nécessaire d'avoir un poinçon différent.

Par conséquent, cela implique un processus complexe de fabrication de la pile dans lequel le poinçon doit être changé à chaque changement de marquage ou dans lequel des séries de piles avec un ou des marquages spécifiques sont réalisés successivement.

Des marquages réalisés par irradiation laser sont divulgués dans les documents JPH04269446 et JP2003217533.

### RESUME DE L'INVENTION

L'invention concerne un accumulateur d'énergie électrique comme une pile électrique qui pallie les inconvénients susmentionnés de l'art antérieur en proposant une pile pouvant recevoir un marquage simple et durable.

A cet effet, l'invention concerne une pile ou accumulateur comprenant un boîtier d'anode, une anode située à l'intérieur du boîtier d'anode, un boîtier de cathode assujetti au boîtier d'anode, un joint de scellement scellant le boîtier de cathode au boîtier d'anode, une cathode située à l'intérieur du boîtier de cathode entre l'anode et le boîtier de cathode, et une membrane entre l'anode et la cathode, le boîtier d'anode et le boîtier de cathode assujettis ensembles présentent, respectivement, une première surface extérieure et une seconde surface extérieure, une troisième surface extérieure étant sécante avec ces premières et secondes surfaces et faisant office de tranche de l'accumulateur, l'accumulateur étant caractérisé en ce qu'une surface extérieure dudit accumulateur comprend au moins un marquage réalisé par échauffement local de la matière, ledit marquage étant électriquement isolant. Ledit échauffement local de la matière formant le marquage enlève de la matière et est réalisé par gravage laser.

Dans un mode de réalisation avantageux, ledit marquage s'étend sur au moins l'une quelconque des faces extérieures de l'accumulateur.

Dans un autre mode de réalisation avantageux de l'invention, ledit échauffement local de la matière par laser est réalisé de sorte que le marquage présente une coloration faisant un contraste avec le matériau de la surface sur lequel ledit marquage est appliqué.

Dans un autre mode de réalisation avantageux de l'invention, le marquage est une image décorative.

Dans un autre mode de réalisation avantageux de l'invention, le marquage est un dispositif anti-contrefaçon.

Dans un autre mode de réalisation avantageux de l'invention, le dispositif anti-contrefaçon comprend une combinaison de plusieurs évidements aux dimensions différentes de la surface formant un agencement unique.

Dans un autre mode de réalisation avantageux de l'invention, le dispositif anti-contrefaçon comprend une combinaison de plusieurs évidements disposés parallèlement les uns aux autres, l'écartement entre deux évidements et la largeur desdits évidements étant hétérogènes pour former un agencement unique.

Dans un autre mode de réalisation avantageux de l'invention, la pile comprend en outre au moins un marquage électriquement conducteur.

L'invention concerne également un appareil électronique comprenant un boîtier fermé dans lequel le trouve un module électronique, ledit boîtier comprenant un logement fermé par une trappe dans lequel un accumulateur pour alimenter électriquement le module électronique peut être agencé, caractérisé en ce que l'accumulateur est un accumulateur selon l'un des modes de réalisation précédents. Dans un mode de réalisation avantageux de l'invention, la trappe est réalisée dans un matériau transparent pour permettre de voir le marquage dudit accumulateur.

Dans un mode de réalisation avantageux de l'invention, le boîtier de l'accumulateur comprend une décoration et en ce que le marquage de l'accumulateur est réalisé de sorte que ladite décoration et ledit marquage se combinent pour former un ensemble esthétique.

Dans un autre mode de réalisation avantageux de l'invention, le boîtier comprend des connecteurs pour obtenir une connexion électrique entre ledit accumulateur et ledit module électronique et en ce que ledit marquage dudit accumulateur est réalisé pour ne pas perturber ladite connexion électrique.

### BREVE DESCRIPTION DES FIGURES

D'autres caractéristiques et avantages de la pile selon la présente invention apparaîtront plus clairement à la lecture de la description détaillée de modes de réalisation de l'invention donnés uniquement à titre d'exemples non limitatifs et illustrés par les dessins annexés où :
- la figure 1 est une vue schématique en coupe d'une pile selon l'art antérieur;
- la figure 2 est une vue schématique en coupe d'une pile selon l'invention;
- la figure 3 est une vue en perspective d'une première application de la pile selon l'invention ;
- la figure 4 est une vue d'un fond de boîte de montre ayant un marquage selon la première application de la pile selon l'invention ;
- la figure 5 est une vue en perspective d'une seconde application de la pile selon l'invention.

### DESCRIPTION DETAILLEE DE L'INVENTION

La figure 2 représente un accumulateur d'énergie électrique 10 comme une pile selon l'invention, cette pile pouvant être rechargeable ou non. Une telle pile 10 est, par exemple, de type bouton et comprend un boîtier d'anode 12 avec une anode 14 située à l'intérieur. La pile comprend en outre un boîtier de cathode 13 assujetti au boîtier d'anode 12. Pour assurer l'étanchéité entre le boîtier d'anode 12 et le boîtier de cathode 13, un joint de scellement 16 scellant le boîtier de cathode 13 au boîtier d'anode 12 est utilisé.

Une cathode 15 est située à l'intérieur du boîtier de cathode 13 entre l'anode 14 et le boîtier de cathode 13. Une membrane 17 est agencée pour se situer entre l'anode 14 et la cathode 15. Le boîtier d'anode 12 présente une première surface extérieure 21 alors que le boîtier cathode 13 présente une seconde surface extérieure 22. Par exemple, la première surface extérieure 21 et la seconde surface extérieure 22 sont parallèles entres elles. La pile 10 comprend en outre une troisième surface extérieure 23 sécante avec ces premières 21 et secondes 22 surfaces ; cette troisième surface 23 représente la tranche de la pile 10 et est composée d'une partie du boîtier d'anode 12 et d'une partie du boîtier de cathode 13. Toutefois, la première surface extérieure 21 et la seconde surface extérieure 22 peuvent ne pas être parallèles et être courbes.

Cette pile 10 est destinée à être placée dans un appareil électronique 100 tel qu'une montre ou une calculatrice. Cet appareil électronique 100 comprend un boîtier 101 dans lequel un module électronique est agencé. Ce module électronique est alimenté par ladite pile 10. Le boîtier 101 est réalisé de sorte à présenter, dans son fond 102, un logement 103 dans lequel la pile 10 vient se placer pour être connectée électriquement au module électronique. Ce logement 103 est fermé par une trappe de pile 104. En général, lorsque la pile 10 est agencée dans son logement 103, une surface devient visible par l'utilisateur. Toutefois, il est possible que l'appareil électronique 100 permette de voir plusieurs surfaces de la pile 10. Le contact ou connexion électrique se fait par la surface opposée à la surface visible par l'utilisateur, généralement la seconde surface extérieure 22 c'est-à-dire l'anode, et par la partie du boîtier de cathode de la troisième surface 23 extérieure faisant office de tranche de la pile 10 via des contacteurs qui se présentent généralement sous la forme de lames métalliques élastiques.

Avantageusement selon l'invention, la pile présente un marquage 18. Ce marquage 18 est réalisé par échauffement local de la matière. Selon l'invention, l'échauffement local de la matière entraîne un enlèvement de matière, au niveau de l'une des surfaces de la pile. Cet enlèvement de matière est réalisé par gravage laser c'est-à-dire qu'un faisceau laser est pointé sur une zone désirée. Le matériau est alors fondu et vaporisé par le laser. Cette utilisation du gravage laser a l'avantage de permettre un processus de marquage des piles plus simple puisque seule la programmation du laser change entre un marquage 18 et un autre. De plus, cette méthode permet d'avoir une profondeur de gravure entre 10 et 200nm, impossible à avoir par étampage. Le gravage laser permet aussi une très bonne adhésion du marquage puisqu'intégré à la matière du boîtier. Selon l'invention, le marquage 18 est réalisé de sorte à être électriquement non conducteur ou isolant. Pour cela, le gravage par laser est effectué sous atmosphère d'oxygène de sorte à ce que l'oxygène et le matériau gravé réagissent pour provoquer une oxydation de la surface gravée. Cette oxydation provoque une augmentation locale de la résistance et donc une moins bonne circulation du courant.

Ce marquage 18 électriquement non conducteur ou isolant peut s'étendre sur la première surface extérieure 21, la seconde surface 22 ou la troisième surface extérieure 23 à condition de ne pas gêner le contact électrique. Bien entendu, ce marquage peut s'étendre sur la première surface extérieure 21 et la seconde surface 22 et la troisième surface 23 extérieure tant que le contact électrique avec les contacteurs de l'appareil électronique 100 n'est pas rompu.

L'avantage d'avoir un marquage 18 non conducteur permet par exemple d'éviter d'isoler certaines parties du circuit imprimé de l'appareil électronique 100 alimenté par la pile 10, comme des points de tests qui doivent être accessibles lorsque la pile 10 n'est pas présente, mais qui doivent actuellement être isolés pour ne pas risquer un mauvais contact lorsque la pile 10 est insérée. De plus, cela évite d'isoler des parties de pièces mécaniques internes de l'appareil électronique 100, ou encore du mouvement dans le cas d'une application horlogère, qui pourraient entrer en contact avec la pile 10.

Un autre avantage est que cela permet de faire office de détrompeur. Lors d'un changement de piles 10, l'utilisateur peut se tromper et mettre la pile dans le mauvais sens. Dans ce cas, des risques d'endommager des composants électriques sensibles aux sens du courant existent. D'ordinaire, il est prévu un élément de protection comme une diode pour prévenir ce genre de soucis, cette diode n'empêchant toutefois pas le courant de circuler en sens inverse si la pile 10 est montée à l'envers, elle sert juste à empêcher des dommages. Avec le marquage 8 selon l'invention, il est possible que la face visible par l'utilisateur soit marquée avec un marquage 8 non conducteur de sorte que si la pile 10 est montée à l'envers, la lame ressort utilisée pour faire contact électrique est en contact de ce marquage 8 non conducteur, le courant ne pouvant donc pas circuler.

L'avantage d'avoir un marquage 18 présentant une coloration noire est d'avoir un contraste entre le matériau de la pile 10 c'est-à-dire du boîtier d'anode 12 et/ou du boîtier de cathode 13 et ledit marquage 18. Ce contraste permet alors audit marquage 18 de ressortir et d'attirer l'attention.

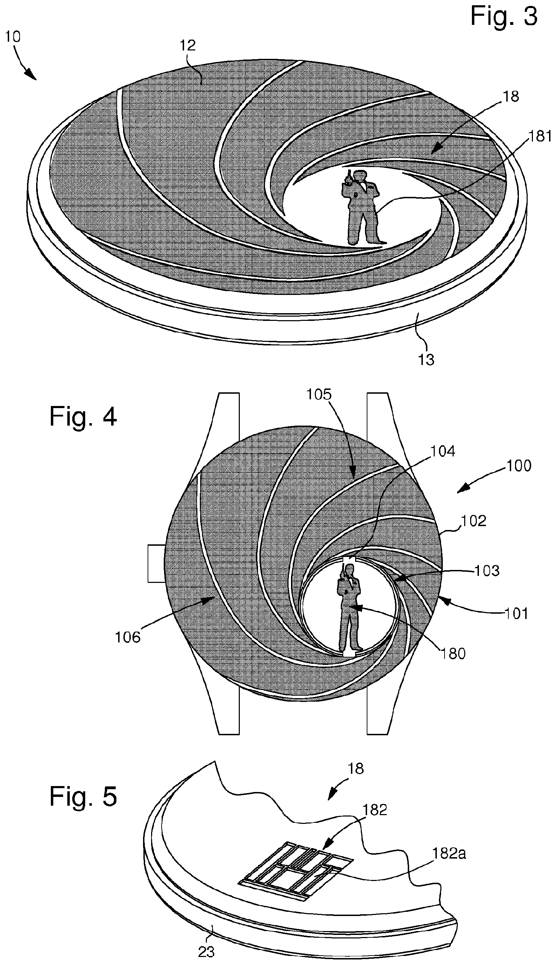

Dans une première application, ces marquages 18 sont utilisés pour réaliser des figures esthétiques 181 ou images décoratives comme visibles à la figure 3. Dans cette optique, la ou les figures esthétiques 181 sont réalisées sur la/les surface(s) de la pile visible(s) par l'utilisateur lorsque la pile 10 est dans son logement 103. Ces figures esthétiques 181 peuvent être utilisées pour réaliser facilement des éditions limitées.

De plus, cette ou ces figures esthétiques 181 peuvent être intégrées dans un ensemble esthétique plus important comme visible à la figure 4. Il devient envisageable d'avoir le boîtier 101 de l'appareil 100 qui comprend la pile 10 présentant une décoration 105 et que la pile 10 soit un élément de cette décoration 105. Pour cela, le marquage 18 de la pile 10 est réalisé pour coopérer avec la décoration 105 du boîtier 101 et former un ensemble esthétique 106. Par exemple, si le boîtier 101 présente une décoration composée d'étoiles formant une constellation spécifique (non représentée), le marquage 18 de la pile 10 peut se présenter sous la forme d'une ou de plusieurs étoiles disposées pour que ladite constellation soit parfaitement représentée une fois la pile 10 dans son logement 103. De même, il peut être prévu qu'un logo tel celui lié au célèbre agent secret 007® soit réalisé : le dessin du canon d'un pistolet étant la décoration 105 du boîtier 101 alors que le personnage constitue le marquage 18.

D'autre part, la figure esthétique 181 peut être simplement le logo du fabricant ou des indications sur les caractéristiques de la pile 10 comme son type ou la tension / courant qu'elle délivre. Dans ce cas, le marquage 18 pourra être incolore de sorte à ne pas être trop visible, surtout s'il est associé à un autre marquage 18 faisant office de figure esthétique 181. Dans cette application, la figure esthétique 181 peut comprendre un réseau de diffraction 180 pour améliorer son visuel.

Cette première application est associée à la solution avantageuse d'avoir une trappe 104 de pile 10 réalisée dans un matériau transparent. Cette transparence permet à l'utilisateur de voir les marquages 18 de la pile 10 quand il le souhaite et non pas seulement lors du changement de la pile 10.

Dans une seconde application, le ou les marquages 18 sont utilisés pour une utilisation anti-contrefaçon. Ce marquage 18 anti-contrefaçon peut se présente sous différentes formes.

Une première forme consiste à réaliser un numéro de série. Une seconde forme de marquage 18 anti-contrefaçon consiste en une structuration spécifique tel un code barre 182 comme visible à la figure 5. Un tel code barre 182 peut être bidimensionnel c'est-à-dire qu'avec la gravure laser, il est envisageable de réaliser une série d'évidements 182a plus ou moins profonds, plus ou moins larges et plus ou moins longs qui par exemple forment un carré. Cette combinaison spécifique est préférentiellement réalisée dans un marquage 18 incolore pour être la moins voyante possible. Ce code barre 182 peut être alors scanné pour vérifier l'authenticité de la pile 10.

Un code barre 182 classique composé d'une pluralité d'évidements 182a parallèles, de même profondeur mais avec des largeurs et des écartements différents pourra être gravé.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Procédé de marquage d'un accumulateur d'énergie électrique (10) comprenant un boîtier d'anode (12), une anode (14) située à l'intérieur du boîtier d'anode, un boîtier de cathode (13) assujetti au boîtier d'anode, un joint de scellement (16) scellant le boîtier de cathode au boîtier d'anode, une cathode (15) située à l'intérieur du boîtier de cathode entre l'anode et le boîtier de cathode, et une membrane (17) entre l'anode et la cathode, le boîtier d'anode (12) et le boîtier de cathode (13) assujettis ensembles présentent, respectivement, une première surface extérieure (21) et une seconde surface extérieure (22), une troisième surface extérieure (23) étant sécante avec ces premières et secondes surfaces et faisant office de tranche dudit accumulateur, le procédé de marquage comportant une étape de marquage (18) d'une des surfaces extérieures dudit accumulateur (21, 22, 23), le marquage étant réalisé par un échauffement local de la matière entraînant un enlèvement de matière, l'enlèvement de matière étant réalisé par gravage laser sous atmosphère oxygène de sorte à ce que l'oxygène et le matériau gravé réagissent pour provoquer une oxydation de la surface gravée de façon à obtenir un marquage électriquement isolant.

2. Procédé selon la revendication 1, dans lequel le marquage (18) s'étend sur au moins l'une quelconque des faces extérieures dudit accumulateur.

3. Procédé selon l'une des revendications précédentes, **caractérisé en ce que** ledit échauffement local de la matière par laser est réalisé de sorte que le marquage (18) présente une coloration faisant un contraste avec le matériau de la surface sur lequel ledit marquage est appliqué.

4. Procédé selon l'une des revendications précédentes, **caractérisé en ce que** le marquage (18) est réalisé de façon à former une image décorative(181).

5. Procédé selon l'une des revendications 1 à 3, **caractérisé en ce que** le marquage (18) est réalisé de façon à former un dispositif anti-contrefaçon (182).

6. Procédé selon la revendication précédente, dans lequel le dispositif anti-contrefaçon (182) est réalisé de façon à ce qu'il comprenne une combinaison de plusieurs évidements (182a) aux dimensions différentes de la surface formant un agencement unique.

7. Procédé selon la revendication 5, dans lequel le dispositif anti-contrefaçon (182) est réalisé de façon à ce qu'il comprenne une combinaison de plusieurs évidements (182a) disposés parallèlement les uns aux autres, l'écartement entre deux évidements et la largeur desdits évidements étant hétérogènes pour former un agencement unique.

8. Procédé selon l'une des revendications précédentes, **caractérisé en ce qu'**il comprend en outre au moins une étape de formation d'un marquage électriquement conducteur.

9. Accumulateur obtenu par un procédé selon l'une des revendications précédentes.

10. Appareil électronique (100) comprenant un boîtier (101) fermé dans lequel se trouve un module électronique, ledit boîtier comprenant un logement (103) fermé par une trappe (104) dans lequel un accumulateur d'énergie électrique pour alimenter électriquement le module électronique peut être agencé, **caractérisé en ce que** ledit accumulateur est un accumulateur (10) selon la revendication précédente.

11. Appareil électronique selon la revendication 10, **caractérisé en ce que** la trappe (104) est réalisée dans un matériau transparent pour permettre de voir le marquage (18) dudit accumulateur.

12. Appareil électronique selon la revendication 10, **caractérisé en ce que** le boîtier de l'accumulateur comprend une décoration (105) et **en ce que** le marquage (18) dudit accumulateur est réalisé de sorte que ladite décoration (105) et ledit marquage (18) se combinent pour former un ensemble esthétique (106).

13. Appareil électronique selon la revendication 10, **caractérisée en ce que** le boîtier (101) comprend des connecteurs pour obtenir une connexion électrique entre ledit accumulateur audit module électronique et **en ce que** ledit marquage (8) dudit accumulateur est réalisé pour ne pas perturber ladite connexion électrique.

## Patentansprüche

1. Verfahren zum Markieren eines Akkumulators (10) für elektrische Energie, umfassend ein Anodengehäuse (12), eine in dem Anodengehäuse angeordnete Anode (14), ein Kathodengehäuse (13), das an dem Anodengehäuse befestigt ist, eine Versiegelungsdichtung (16), die das Kathodengehäuse an dem Anodengehäuse versiegelt, eine in dem Kathodengehäuse zwischen der Anode und dem Kathodengehäuse angeordnete Kathode (15), und eine Membran (17) zwischen der Anode und der Kathode, wobei das Anodengehäuse (12) und das Kathodengehäuse (13), die aneinander befestigt sind, eine erste äußere Oberfläche (21) und entsprechend eine zweite äußere Oberfläche (22) aufweisen, wobei eine dritte äußere Oberfläche (23) diese erste und diese zweite Oberfläche schneidet und als Rand des Akkumulators dient, wobei das Markierungsverfahren einen Schritt des Markierens (18) einer der äußeren Oberflächen (21, 22, 23) des Akkumulators umfasst, wobei das Markieren durch lokale Erwärmung des Materials erfolgt, was eine Materialabtragung zur Folge hat, wobei die Abtragung des Materials durch Laser-Gravur unter Sauerstoffatmosphäre in einer Weise erfolgt, dass der Sauerstoff und das gravierte Material reagieren, um eine Oxidation der gravierten Oberfläche in einer Weise hervorzurufen, dass eine elektrisch isolierende Markierung erhalten wird.

2. Verfahren nach Anspruch 1, wobei sich die Markierung (18) über mindestens eine beliebige der äußeren Flächen des Akkumulators erstreckt.

3. Verfahren nach einem der vorhergehenden Ansprüche, **dadurch gekennzeichnet, dass** die lokale Laser-Erwärmung des Materials in einer Weise erfolgt, dass die Markierung (18) eine Einfärbung aufweist, die einen Kontrast mit dem Material der Oberfläche bildet, auf die die Markierung aufgebracht wird.

4. Verfahren nach einem der vorhergehenden Ansprüche, **dadurch gekennzeichnet, dass** die Markierung (18) in einer Weise erfolgt, dass ein Zierbild (181) gebildet wird.

5. Verfahren nach einem der Ansprüche 1 bis 3, **dadurch gekennzeichnet, dass** die Markierung (18) in einer Weise erfolgt, dass eine Anti-Fälschungsvorrichtung (182) gebildet wird.

6. Verfahren nach dem vorhergehenden Anspruch, wobei die Anti-Fälschungsvorrichtung (182) in einer Weise ausgebildet ist, dass sie eine Kombination aus mehreren Vertiefungen (182a) mit unterschiedlichen Abmessungen der Oberfläche, die eine einzigartige Anordnung bilden, umfasst.

7. Verfahren nach Anspruch 5, wobei die Anti-Fälschungsvorrichtung (182) in einer Weise ausgebildet ist, dass sie eine Kombination aus mehreren Vertiefungen (182a), die zueinander parallel angeordnet sind, umfasst, wobei der Abstand zwischen zwei Vertiefungen und die Breite der Vertiefungen uneinheitlich sind, um eine einzigartige Anordnung zu bilden.

8. Verfahren nach einem der vorhergehenden Ansprüche, **dadurch gekennzeichnet, dass** es ferner mindestens einen Schritt des Bildens einer elektrisch leitenden Markierung umfasst.

9. Akkumulator, hergestellt durch ein Verfahren nach einem der vorhergehenden Ansprüche.

10. Elektronisches Gerät (100), umfassend ein geschlossenes Gehäuse (101), in dem ein elektronisches Modul angeordnet ist, wobei das Gehäuse einen Aufnahmeraum (103) aufweist, der durch eine Klappe (104) verschlossen ist und in dem ein Akkumulator für elektrische Energie zur elektrischen Versorgung des elektronischen Moduls anordbar ist, **dadurch gekennzeichnet, dass** der Akkumulator ein Akkumulator (10) nach dem vorhergehenden Anspruch ist.

11. Elektronisches Gerät nach Anspruch 10, **dadurch gekennzeichnet, dass** die Klappe (104) aus einem lichtdurchlässigen Material gebildet ist, um die Sicht auf die Markierung (18) des Akkumulators zu ermöglichen.

12. Elektronisches Gerät nach Anspruch 10, **dadurch gekennzeichnet, dass** das Gehäuse des Akkumulators eine Verzierung (105) aufweist und dass die Markierung (18) des Akkumulators in einer Weise ausgebildet ist, dass die Verzierung (105) und die Markierung (18) kombiniert sind, um eine ästhetische Einheit (106) zu bilden.

13. Elektronisches Gerät nach Anspruch 10, **dadurch gekennzeichnet, dass** das Gehäuse (101) Verbinder umfasst, um eine elektrische Verbindung zwischen dem Akkumulator und dem elektronischen Modul zu erhalten, und dass die Markierung (8) des Akkumulators so ausgebildet ist, dass sie die elektrische Verbindung nicht stört.

## Claims

1. Method for marking an electrical energy accumulator (10) including an anode case (12), an anode (14) situated inside the anode case, a cathode case (13) fixed to the anode case, a seal (16) sealing the cathode case to the anode case, a cathode (15) situated inside the cathode case between the anode and the cathode case, and a membrane (17) between the anode and the cathode, the anode case (12) and the cathode case (13) that are fixed to each other respectively have a first outer surface (21) and a second outer surface (22), a third outer surface (23) being secant with said first and second surfaces and serving as the edge of said accumulator, the method for marking comprising a step of marking (18) of one of the outer surfaces of said accumulator (21, 22, 23), the marking being created by a local heating of the material resulting in a removal of material, the removal of material being carried out by laser etching in an oxygen atmosphere in such a way that the oxygen and the etched material react to cause an oxidation of the etched surface in such a way as to obtain an electrically insulating marking.

2. Method according to claims 1, wherein the marking (18) extends over at least any one of the outer surfaces of said accumulator.

3. Method according to any of the preceding claims, **characterized in that** said local heating of material by laser is performed so that the marking (18) has a colour contrasting with the material of the surface to which said marking is applied.

4. Method according to any of the preceding claims, **characterized in that** the marking (18) is performed in such a way as to form a decorative image (181).

5. Method according to any of claims 1 to 3, **characterized in that** the marking (18) is performed in such a way as to form an anti-counterfeiting device (182).

6. Method according to the preceding claim, **characterized in that** the anti-counterfeiting device (182) is performed in such a way that it includes a combination of several recesses (182a) with different surface dimensions forming a unique arrangement.

7. Method according to claim 5, **characterized in that** the anti-counterfeiting device (182) is performed in such a way that it includes a combination of several recesses (182a) arranged parallel to each other, the space between two recesses and the width of said recesses being heterogeneous to form a unique arrangement.

8. Method according to one of the preceding claims, **characterized in that** it further includes at least one step of forming an electrically conductive marking.

9. Accumulator obtained by a method according to one of the preceding claims.

10. Electronic apparatus (100) including a closed case (101) containing an electronic module, said case including a hatch (103) closed by a hatch cover (104) in which an electrical energy accumulator for electrically powering the electronic module can be arranged, **characterized in that** said accumulator is an accumulator (10) according to any of the preceding claims.

11. Electronic apparatus according to claim 10, **characterized in that** the hatch cover (104) is made of a transparent material to allow the marking (18) of said accumulator to be seen.

12. Electronic apparatus according to claim 10, **characterized in that** the case of the accumulator includes a decoration (105) and **in that** the marking (18) of said accumulator is made such that said decoration (105) and said marking (18) combine to form an attractive assembly (106).

13. Electronic apparatus according to claim 10, **characterized in that** the case (101) includes connectors for obtaining an electrical connection between said accumulator and said electronic module and **in that** said marking (8) of said accumulator is achieved such that said electrical connection is not disrupted.
